# EUROPEAN PATENT APPLICATION

(11) **EP 2 408 176 A1**
(43) Date of publication of application: **18.01.2012**
(21) Application number: 10015369.1
(22) Date of filing: 07.12.2010
(51) Int. Cl.: H04M 1/04, A45F 5/02, H04B 1/38

(54) **Combination wallet and wireless phone case**

(30) Priority: 15.07.2010 US 836763
(71) Applicant: McCarthy, Stephen K., Hong Kong (HK)
(72) Inventor: McCarthy, Stephen K., Hong Kong (HK)
(74) Representative: Micheli & Cie SA

(57) **Abstract**

A combination wireless phone case and wallet includes a substantially hollow housing formed of first and second hinged sections that open and close in a clamshell-type fashion. The first section includes an open front face in communication with a phone chamber that is dimensioned and configured to tightly retain a select wireless phone. An elastomeric retaining strap is superimposed on the chamber for tightly anchoring the phone therein. The strap includes an aperture that aligns with a select control button on the phone so that it is operable whenever the phone is being stored. The housing is configured to allow an earphone cord and charger cable to be connected to a phone positioned within the chamber. A band extending from the first section includes a pad at a distal end for cleaning the phone's display screen. A plurality of compartments within the second section are configured to retain credit cards and other similar personal items.

## Description

The present invention relates to a combination wallet and wireless phone case for conveniently transporting a phone, credit cards and other similar personal items.

Most people carry a wireless phone for conveniently communicating when traveling or when in remote locations, where a conventional telephone is inaccessible. However, storing and protecting the wireless phone has always been problematic. When a wireless phone is placed within a pocket or purse, random numbers are often inadvertently dialed and the phone is difficult to locate or grasp; furthermore, because wireless phones are often dropped, they must be frequently repaired or replaced, which is burdensome and expensive. As a result, many protective covers for wireless phones have been heretofore developed to address the above-described problems. However, conventional phone covers are usually incapable of retaining other personal items such as credit cards or drivers' licenses. Therefore, a wireless phone user must also transport a wallet, a purse or a similar storage device, which is cumbersome and inconvenient. Furthermore, few, if any, of the phone's features are accessible when the phone is stored within a conventional phone cover. Accordingly, there is currently a need for a wireless-phone cover that overcomes the above-described problems associated with conventional phone covers.

A review of the prior art reveals a myriad of cell phone covers and wallets. For example, U.S. published patent application no. 20080121322 filed on behalf of Thomson discloses a cell phone wallet comprising a sleeve that slips over the upper section of a flip-phone. The sleeve includes a transparent panel that is superimposed on both the phone's keypad and the display screen, allowing the phone to be operated when stored. The sleeve further includes a plurality of card slots on a rear wall for receiving credit cards.

U.S. published patent application no. 20080032758 filed on behalf of Rostami discloses a protective cover for portable electronic devices formed of a rigid inner layer encapsulated by a soft outer layer. The cover includes ports for accessing certain features of the portable electronic device.

U.S. published patent application no. 20070293288 on behalf of Lin et al. discloses a cover comprising a hollow casing having an interior compartment for receiving an electronic device. An earphone cable may be coiled about a rectangular spool mounted on an exterior surface of the casing.

U.S. patent no. 20070060224 issued to Liu discloses a mobile phone case including a pair of shells joined by an elastomeric strip that biases the shells in a closed position.

U.S. patent no. 6,839,432 issued to Martin discloses a phone storage case having a hinged door that provides selective access to an interior storage compartment.

U.S. patent no. 6,981,085 issued to Tree et al. discloses a case including a controlling interface for manipulating a stored electronic device.

As indicated above, numerous cases and covers for portable electronic devices exist in the prior art. Although the published patent application filed on behalf of Thomson discloses a wireless phone holder having credit card slots, the device is not configured to allow a user to easily access all of the phone's features when received within the sleeve. Furthermore, the device does not include specifically-configured access ports for accommodating earphone and charger cords, or a means for cleaning the phone's display screen. Finally, the phone is specifically designed for an archaic flip-phone, as opposed to the contemporary 3G or 4G wireless phone. Conversely, the present invention provides an improved phone case and wallet having a display-screen cleaning pad, various access ports that allow a phone to be fully operational when stored and a plurality of slots for storing credit cards and other personal items.

A combination wireless phone case and wallet includes a substantially hollow housing formed of first and second hinged sections that open and close in a clamshell-type fashion. The first section includes an open front face in communication with a phone chamber that is dimensioned and configured to tightly retain a select wireless phone. An elastomeric retaining strap is superimposed on the chamber for tightly anchoring the phone therein. The strap includes an aperture that aligns with a select control button on the phone so that it is operable whenever the phone is being stored. The housing is configured to allow an earphone cord and charger cable to be connected to a phone positioned within the chamber. A band extending from the first section includes a pad at a distal end for cleaning the phone's display screen. A plurality of compartments within the second section are configured to retain credit cards and other similar personal items.

It is therefore an object of the present invention to provide a combination wallet and wireless phone case that allows a user to simultaneously store and transport a wireless phone and other personal items.

It is another object of the present invention to provide a combination wallet and wireless phone case that allows a carrier to fully operate a wireless phone stored therein.

Other objects, features, and advantages of the present invention will become readily apparent from the following detailed description of the preferred embodiment when considered with the attached drawings and the appended claims.

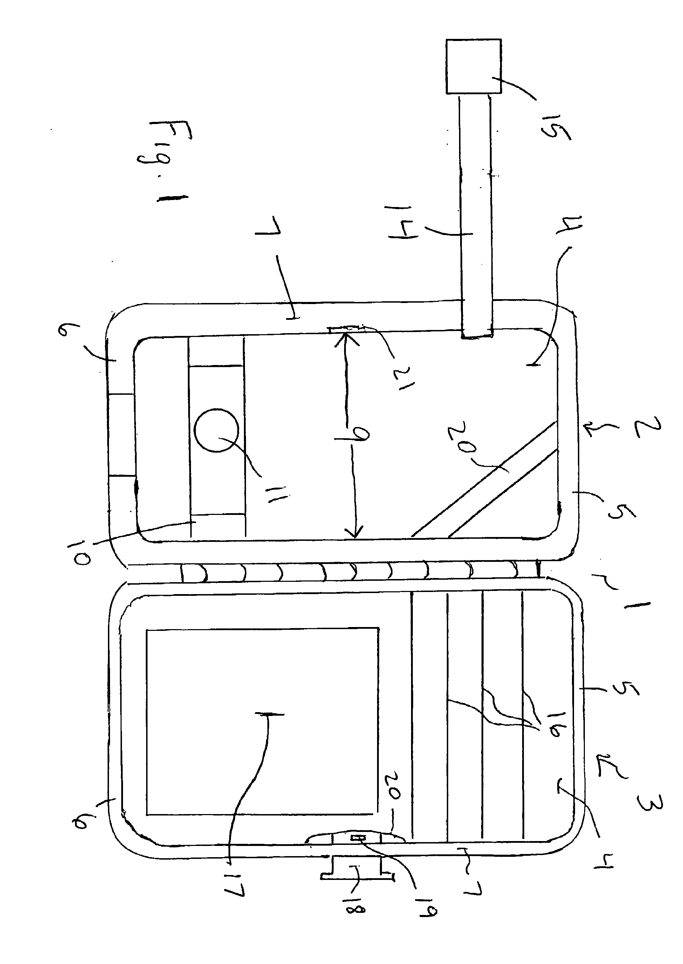

Figure 1 is a front, plan view of the device according to the present invention.

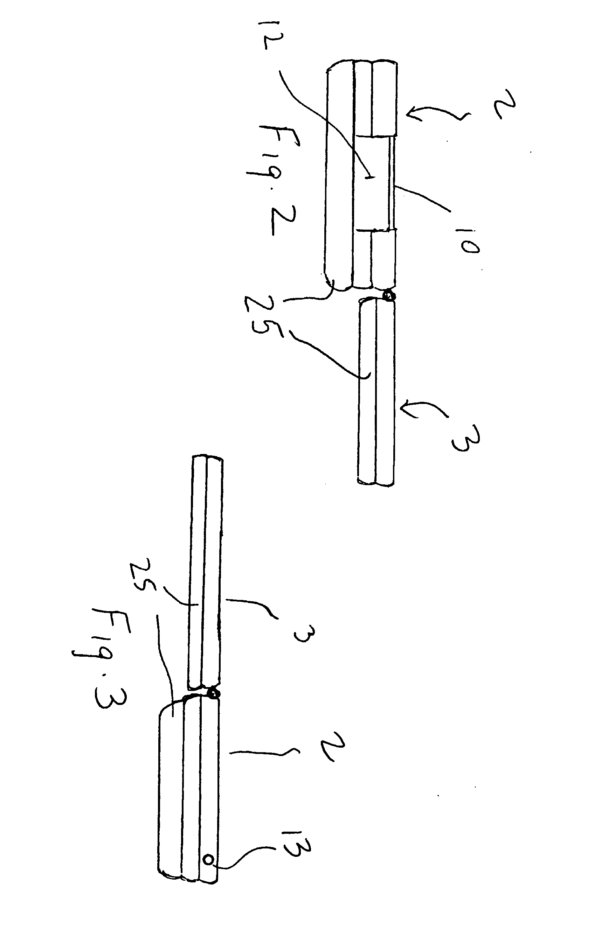

Figure 2 is a bottom view of the device.
Figure 3 is a top view of the device.

The present invention relates to a combination wireless phone case and wallet that is particularly designed to contain the 3G or 4G wireless phone currently marketed and sold under the trademark iPhone®. The device includes a substantially hollow housing 1 formed of first 2 and second 3 hinged sections that open and close in a clamshell-type fashion. The housing sections are each formed of a rigid, durable inner layer that is encapsulated by a padded exterior 25 for protecting the phone while minimizing impact with other objects. Each housing section includes a rear panel 4 having a top wall 5, a bottom wall 6 and a pair of sidewalls 7 perpendicularly extending therefrom. The first section includes an open front face in communication with a phone chamber 9 that is dimensioned and configured to tightly retain the wireless phone.

Proximal the bottom wall of the first section is an elastomeric retaining strap 10 that extends from one sidewall to the other to anchor the phone within the chamber. The strap includes a centrally-disposed aperture 11 that aligns with a select control button on the phone so that the button is readily accessible whenever the phone is being stored. For example, if the device is designed for the iPhone® brand wireless phone, the strap and aperture could be positioned to align with the phone's HOME button to selectively depict numerous control icons on a touch- screen display. Consequently, by depicting the control icons, a user can completely operate the phone and access substantially all of its features while the phone is stored within the chamber 9. A supplemental strap 20 may extend diagonally from a sidewall to the top wall to grip a corner of a wireless phone.

The bottom wall of the first section includes a slot 12 for accommodating a charger plug that mates with an interface on a lower end of the phone; accordingly, the phone may be conveniently recharged without removing it from the phone chamber. Likewise, the top wall has a port 13 for receiving a headphone cord, allowing a user to privately listen to audio output while the phone is stored within the chamber. A band 14 fastened to the rear surface of the first section includes a pad 15 at a distal end for cleaning the phone's display screen.

On the inner surface of the second section's rear panel are a plurality of credit card compartments 16 similar to those of conventional wallets. One of the compartments preferably includes a transparent panel 17 for viewing critical information on a personal document, such as a driver's license.

Extending from one of the section's sidewalls is a depressible button 18 having a latch 19 at a distal end; a linear spring 20 biases the button outwardly so that the latch tightly seats within a latch receptacle 21 on the other section to secure the housing in a closed position.

As is readily apparent from the detailed description provided above, the present invention provides a durable, protective cover for a wireless phone that allows the phone to be operated when stored therein. Furthermore, the device allows a user to simultaneously transport numerous other personal items thereby eliminating the need to transport both a wireless-phone cover and a wallet.

Although the device depicted and described is primarily designed for the wireless phone sold under the trademark iPhone®, it can also be configured to accommodate many other types of similar 3G or 4G phones. As such, the above-described device is not limited to the exact details of construction and enumeration of parts provided herein. Furthermore, the size, shape and materials of construction of the various components can be varied.

Although there has been shown and described the preferred embodiment of the present invention, it will be readily apparent to those skilled in the art that modifications may be made thereto which do not exceed the scope of the appended claims. Therefore, the scope of the invention is only to be limited by the following claims.

## Claims

1. A combination wireless phone case and wallet comprising:
a substantially hollow housing formed of a first section and a second section hingedly attached thereto, said first section and said second section opening and closing in a clamshell-type fashion, said first section having an open front face in communication with a phone chamber, said phone chamber dimensioned and configured to tightly retain a wireless phone;
an elastomeric retaining strap extending over said chamber to anchor a phone therein, said strap having an aperture thereon, said aperture positioned to align with a select control button on the phone so that said phone is operable when received within said chamber.

2. The combination according to claim 1, wherein said first section and said second section are each formed of a rigid, durable inner layer that is encapsulated by a padded exterior layer for protecting a phone while minimizing impact with other objects.

3. The combination according to claim 1, wherein said first section includes a bottom wall having a slot formed thereon, said slot in communication with said chamber for accommodating a charger plug allowing the phone to be recharged while stored within said chamber.

4. The combination according to claim 1, wherein said first section further comprises a top wall having a port thereon that is in communication with said chamber for receiving a headphone cord, allowing a user to privately listen to a phone's audio output whenever the phone is positioned within said chamber.

5. The combination according to claim 1, further comprising a cleaning implement attached to said first section, said cleaning implement including an elongated band having a pad at a distal end for cleaning a phone's display screen.

6. The combination according to claim 1, further comprising a plurality of credit card compartments disposed within said second section.

7. The combination according to claim 6, wherein one of said compartments includes a transparent panel for allowing a user to view contents thereof.

8. The combination according to claim 1, further comprising a closure means for securing said first section and said second section in a closed position to encapsulate a wireless phone.

9. The combination according to claim 8, wherein said closure means comprises a depressible, spring-biased button extending from either of said first section and said second section, said button having a latch at a distal end that seats within a latch receptacle on another of said first section and said second section to releasably secure the housing in the closed position.
